# EUROPEAN PATENT APPLICATION

(11) **EP 1 820 808 A1**
(43) Date of publication of application: **22.08.2007**
(21) Application number: 07003086.1
(22) Date of filing: 14.02.2007
(51) Int. Cl.: C08F 8/20

(54) **Method of halogenating butyl rubber without acid neutralization agents**

(30) Priority: 15.02.2006 US 773409 P; 15.02.2006 US 773411 P
(71) Applicant: Lanxess Inc., Sarnia, Ontario N7T 7M2 (CA)
(72) Inventor: Resendes, Rui, Corunna, Ontario, N0N 1G0 (CA); Kaszas, Gabor, Akron, OH 44213 (US)
(74) Representative: Herbold, Matthias

(57) **Abstract**

A method to halogenate butyl rubber in the absence of water and, more particularly, without the need for addition of neutralization agents. The butyl rubber contains at least 4.1 mol% of a multi-olefin and the multi-olefin serves as a sink for the hydrohalic Brönsted acids generated when a halogenation agent is added. This obviates the need for aqueous phase acid neutralization. The novel halogenated butyl rubber produced using the method advantageously possesses a high degree of desirable exo-allylic bromides with relatively low levels of the less desirable endo-allylic bromides.

## Description

### Field of the Invention

The invention relates to the halogenation of butyl rubber in the absence of neutralization agents. More particularly, the invention relates to a process for halogenating butyl rubber in the absence of water and without the addition of neutralization agents, polymers produced according to the process and cured articles made therefrom.

### Background of the Invention

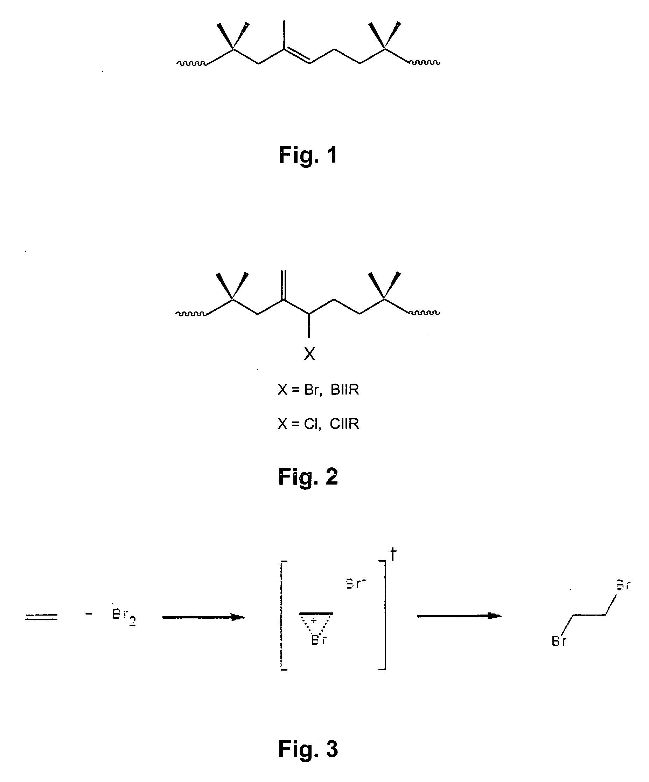

The random copolymer of isobutylene (IB) and isoprene (IP) is a synthetic elastomer commonly referred to as butyl rubber (IIR). Since the 1940's, IIR has been prepared in a slurry process in which isobutylene is randomly copolymerized with small amounts of isoprene (1 -2 mol %). The backbone structure of IIR (Figure 1), which is mostly comprised of polyisobutylene segments, imparts superior air impermeability, oxidative stability and excellent fatigue resistance to this material (*see* Chu, C. Y. and Vukov, R., Macromolecules, 18, 1423-1430, 1985).

The first major application of IIR was in tire inner tubes. Despite the low levels of backbone unsaturation (ca. 0.8 - 1.8 mol %), IIR possesses sufficient vulcanization activity for inner tube application. With the evolution of the tire inner liner, it became necessary to enhance the cure reactivity of IIR to levels typically found for conventional diene-based elastomers such as butadiene rubber (BR) or styrene-butadiene rubber (SBR). To this end, halogenated grades of butyl rubber were developed. The treatment of organic IIR solutions with elemental chlorine or bromine results in the isolation of chlorobutyl (CIIR) and bromobutyl (BIIR) rubber (Figure 2). Bromobutyl rubber typically contains from about 1 to about 3, preferably from about 1 to about 2, weight percent of isoprene and from about 97 to about 99, preferably from about 98 to about 99, weight percent of isobutylene, based on the hydrocarbon content of the rubber, and from about 1 to about 4, preferably from about 1.5 to about 3, weight percent of bromine, based on the bromobutyl rubber. Chlorobutyl rubber typically contains from about 1 to about 3, preferably from about 1 to about 2, weight percent of isoprene and from about 97 to about 99, preferably from about 98 to about 99, weight percent of isobutylene, based on the hydrocarbon content of the rubber and from about 0.5 to about 2.5, preferably from about 0.75 to about 1.75 weight percent of chlorine, based on the chlorobutyl rubber. These materials are marked by the presence of reactive allylic halides along the polymer main chain. The enhanced reactivity of these moieties (c.f. traditional elastomer unsaturation) elevates the cure reactivity of CIIR and BIIR to levels comparable to those possessed by materials such as BR and SBR. This allows for acceptable levels of adhesion between, for example, a BIIR based inner liner formulation and a BR based carcass compound. Not surprisingly, the enhanced polarizability of Br compared to Cl results in BIIR being far more reactive than CIIR. As such, BIIR is the most commercially significant grade of halobutyl rubber.

Commercially, halogenation of the butyl rubber is carried out in a hydrocarbon solution such as hexane using elemental chlorine or bromine. The solution of butyl rubber with the desired molecular weight and mole percent unsaturation in hexane may be prepared by one of two procedures; one involving dissolution of the slurry from a butyl polymerization reactor and the other involving dissolution of solid pieces of finished butyl rubber. In the former procedure the cold slurry in methyl chloride is passed into a drum containing hot liquid hexane which rapidly dissolves the fine slurry particles. The methyl chloride and the unreacted monomers are flashed off for recovery and recycle and the hot solution is adjusted to the desired concentration for halogenation, typically from about 20 to about 25 weight percent butyl rubber in an adiabatic flash step. In the latter procedure bales of finished butyl rubber, chopped or ground to small pieces, are conveyed to a series of agitated dissolving vessels and solutions containing from about 15 to about 20 weight percent butyl rubber are obtained in from about 1 to about 4 hours depending upon the temperature, particle size and amount of agitation. In the halogenation process the solution of butyl rubber is treated with chlorine or bromine at a temperature of from about 40 to about 65°C in one or more highly agitated reaction vessels, the chlorine being introduced as a gas or in dilute solution because of its rate of reaction with butyl rubber. Because of its lower rate of reaction bromine may be used in liquid or gaseous form. The hydrochloric or hydrobromic acid generated during the halogenation is neutralized with dilute aqueous base and the aqueous layer is subsequently removed by settling. Antioxidants or stabilizers are then added and the halogenated butyl rubber is then recovered in a manner similar to that used to recover butyl rubber.

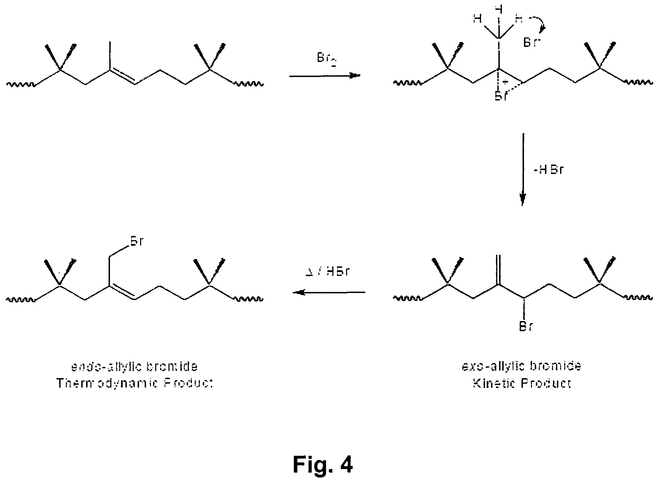

Investigations of the molecular structure of the halogenated butyl rubbers have shown that, in current commercial halogenation procedures, a number of allylic halides are produced by means of an ionic mechanism wherein a positively charged halogen atom is added to the double bond of the enchained isoprene and a proton alpha to the carbonium ion is subsequently abstracted by a negatively charged species resulting in a shift in the double bond. For example, the bromination of IIR proceeds via an electrophilic attack of Br₂ at the isoprene center. In general, the treatment of an unhindered olefin with bromine results in the addition of Br₂ across the double bound. This process proceeds through a bromonium intermediate (Figure 3). In the case of IIR, the steric crowding around the isoprene center by adjacent isobutylene repeat units renders the deprotonation pathway depicted in Figure 4 the most favorable one. This ultimately results in the formation of the exo-methylene allylic halide isomer or exo-allylic bromide. This latter species is the kinetically favored product. At elevated temperatures (or in the presence of catalytic amounts of HBr), rapid rearrangement to the thermodynamically favored endo-allylic bromide occurs (Figure 4, see Parent, J. S., Thom, D. J., White, G., Whitney, R. A., and Hopkins, W., J. Polym. Sci. Part A: Polym.Chem., 29, 2019-2026, 2001).

The *exo*-allylic bromide depicted in Figure 4 is the structure of choice as this species is preferred for use with conventional curing systems. In fact, it is believed that these exo-allylic halide structures are the reason why the halogenated butyl rubbers exhibit enhanced cure compatibility with highly unsaturated elastomeric materials such as natural rubber, styrene-butadiene rubbers, polybutadiene rubbers and the like relative to ordinary butyl rubber. To prevent the acid-catalyzed rearrangement from the exo-allylic halide to the endo-allylic halide, halogenation reactions are carried out in the presence of water. The presence of a distinct water phase during the bromination provides a vehicle into which the HBr preferentially migrates after being generated. This phenomenon physically separates the HBr from the kinetic allylic halide (i.e. minimizes rearrangement reactions) and maintains it in a medium which facilitates neutralization with aqueous base (e.g. sodium hydroxide). From an industrial perspective, it would be beneficial to remove the need for a two-phase (e.g. water and hexanes) solvent mixture and, perhaps more beneficially, to remove the aqueous acid neutralization step. However, this cannot come at the expense of acid catalyzed exo-allylic bromide rearrangement.

Current commercially available butyl rubber grades containing isobutylene and isoprene include PB101, PB301, and PB402. These materials typically have a Mooney viscosity in the range of from about 25 to 60 MU, with an approximate weight average molecular weight of 500,000 g/mol and an unsaturation level between 0.5 and 2.2 mol % (by NMR spectroscopy).

CA 2,418,884, filed February 14, 2003, by Resendes, et al., (which is incorporated herein by reference) discloses a butyl rubber polymer comprising an isoolefin, for example isobutylene, and at least 4.1 mol% of a multiolefin, for example isoprene. Although halogenated butyl rubber polymers made from this high-isoprene butyl rubber polymer are generally disclosed (pp. 8-9), no specific process for making the polymer is disclosed. In particular, no process is disclosed that obviates the need for acid neutralization nor for performing halogenation in anything other than a conventional bi-phasic solvent-aqueous medium. A non-aqueous single-phase solution process is not disclosed. In addition, no teaching is provided of the allylic structure of the halogenated butyl rubber or of its physical properties.

US patent 4,563,506, filed October 1, 1984, by Kowalski, et al., discloses a non-aqueous single-phase process performed in an extruder. Kowalski, et al. teaches away from solution processes at column 7, lines 56-65. Furthermore, Kowalski, et al., teaches the desirability of a high percentage of endo-allylic (primary allylic) bromide and the requirement that the process must be carried out under acid conditions (column 8, lines 10-36). As a result, there is no motivation on the part of Kowalski, et al. to obviate the need for aqueous acid neutralization, as there is no desire to conduct aqueous acid neutralization in the first place.

Conventional commercially available grades of IIR ranging in isoprene content from ca. 0.5 to 2.0 mol % are presently used as substrates for the bromination chemistry discussed above. To achieve any appreciable amount of exo-allylic bromide in the final product, the solution process is currently carried out in the presence of water with aqueous neutralization of the HBr by-product to prevent acid catalyzed re-arrangement to the endo-allylic form. As a result, the need still exists for a non-aqueous process for halogenating butyl rubber that obviates the need for caustic addition.

### Summary of the Invention

It has been discovered that the bromination of IIR with elevated levels of isoprene (ca. 3 - 6.5 mol % of isoprene) can be successfully carried out in the absence of water and without the need for addition of a neutralization agent. Importantly, the bromination is accomplished without any significant rearrangement of the *exo*-allylic bromides to the endo structure. The elimination of a caustic neutralization agent is environmentally beneficial and cost effective.

According to an aspect of the invention, there is provided a non-aqueous process for preparing a halogenated butyl rubber comprising: providing a butyl rubber polymer comprising repeating units derived from at least one isoolefin monomer and at least 4.1 mol% of repeating units derived from at least one multiolefin monomer; adding a halogenation agent to the butyl rubber polymer; and, reacting the halogenation agent with the butyl rubber polymer to create a halogenated butyl rubber containing at least 1.5 mol% of repeating units derived from the at least one multiolefin monomer.

The butyl rubber may be provided in a single-phase solution, preferably a solution comprising a liquid solvent suitable for dissolving butyl rubber. The halogenation agent may be added to the butyl rubber in the single-phase solution. The halogenation agent may comprise an elemental halide or an organo-halide precursor thereto. The hydrohalic Brönsted acid that is formed while reacting the halogenation agent with the butyl rubber polymer may be scavenged *in-situ* by the multiolefin and may be scavenged through Markovnikov or anti-Markovnikov addition. The reaction is thereby permitted to take place without the addition of an acid-scavenger, such as a caustic neutralization agent, which allows the reaction to take-place in the absence of water.

According to another aspect of the invention, there is provided a halogenated butyl rubber polymer comprising: repeating units derived from at least one isoolefin monomer and at least 1.5 mol % of repeating units derived from at least one multiolefin monomer; and, at least 0.4 mol% of an exo-allylic halide of the multiolefin monomer. The butyl rubber may further comprise an endo-allylic halide in an amount of from 0.1 mol% to 0.5 mol%. The ratio of the exo-allylic halide to the endo-allylic halide may be at least 4. The exo-allylic halide may be a bromide and may be present on the same polymer backbone as the multiolefin. The multiolefin may be present in an amount of at least 5.0 mol%. The polymer may have a mono-modal molecular weight distribution.

According to yet another aspect of the invention, there is provided a halogenated butyl rubber polymer comprising: repeating units derived from at least one isoolefin monomer; at least 4.1 mol % of repeating units derived from at least one multiolefin monomer, the repeating units comprising an allylic halide; the allylic halide comprising an exo-allylic halide of the multiolefin monomer present in a first molar quantity; the allylic halide further comprising an endo-allylic halide of the multiolefin monomer present in a second molar quantity; and, wherein the ratio of the first molar quantity to the second molar quantity is at least 4.

Peroxide cured articles may be made from any of the foregoing halogenated butyl rubbers. For example, a peroxide cured article may be prepared by: providing in a single phase liquid solution a butyl rubber polymer comprising repeating units derived from at least one isoolefin monomer and at least 4.1 mol % of repeating units derived from at least one multiolefin monomer; adding a halogenation agent to the butyl rubber polymer in the single phase liquid solution; reacting the halogenation agent with the multiolefin monomer in the absence of water to create a halogenated butyl rubber containing an allylic halide and at least 1.5 mol% of the original multiolefin monomer; adding a peroxide curing agent to the halogenated butyl rubber; and, curing the halogenated butyl rubber. The peroxide cured article may have an ultimate elongation of at least 500%.

### Brief Description of the Drawings

Having summarized the invention, embodiments thereof will now be described in detail with reference to the accompanying figures, in which:
Fig. 1 illustrates the backbone structure of butyl rubber;
Fig. 2 illustrates the backbone structure of halobutyl rubber;
Fig. 3 illustrates the halogenation of an olefin by elemental bromine (Br₂);
Fig. 4 illustrates the bromination of butyl rubber and the acid- catalyzed rearrangement of exo-allylic bromide to endo-allylic bromide;
Fig. 5a illustrates Markovnikov addition of HBr to butyl rubber;
Fig. 5b illustrates the product of anti-Markovnikov addition of HBr to butyl rubber;
Fig. 6 shows MDR cure characteristics of Examples 8 and 9; and,
Fig. 7 shows Stress-Strain characteristics of Examples 8 and 9.

### Detailed Description

The butyl rubber is not limited to a specific isoolefin. However, isoolefins within the range of from 4 to 16 carbon atoms, in particular 4-8 carbon atoms, such as isobutene, 2-methyl-1-butene, 3-methyl-1-butene, 2-methyl-2-butene, 4-methyl-1-pentene and mixtures thereof are preferred. Most preferred is isobutene.

The butyl rubber is not limited to a specific multiolefin. Every multiolefin copolymerizable with the isoolefin known by the skilled in the art can be used. However, multiolefins with in the range of from 4-14 carbon atoms, such as isoprene, butadiene, 2-methylbutadiene, 2,4-dimethylbutadiene, piperyline, 3-methyl-1,3-pentadiene, 2,4-hexadiene, 2-neopentylbutadiene, 2-methly-1,5-hexadiene, 2,5-dimethly-2,4-hexadiene, 2-methyl-1,4-pentadiene, 2-methyl-1,6-heptadiene, cyclopenta-diene, methylcyclopentadiene, cyclohexadiene, 1-vinyl-cyclohexadiene and mixtures thereof, in particular conjugated dienes, are preferably used. Isoprene is particularly preferably used.

As optional monomers every monomer copolymerizable with the isoolefins and/or dienes known by the skilled in the art can be used. α-methyl styrene, p-methyl styrene, chlorostyrene, cyclopentadiene and methylcyclopentadiene are preferably used. Indene and other styrene derivatives may also be used in this invention

The multiolefin content is at least greater than 4.1 mol%, more preferably greater than 5.0 mol%, even more preferably greater than 6.0 mol%, yet even more preferably greater than 7.0 mol%.

Preferably, the butyl rubber monomer mixture comprises in the range of from 80% to 95% by weight of at least one isoolefin monomer and in the range of from 4.0% to 20% by weight of at least one multiolefin monomer. More preferably, the monomer mixture comprises in the range of from 83% to 94% by weight of at least one isoolefin monomer and in the range of from 5.0% to 17% by weight of a multiolefin monomer. Most preferably, the monomer mixture comprises in the range of from 85% to 93% by weight of at least one isoolefin monomer and in the range of from 6.0% to 15% by weight of at least one multiolefin monomer.

The weight average molecular weight, M_{w}, is preferably greater than 240 kg/mol, more preferably greater than 300 kg/mol, even more preferably greater than 500 kg/mol, yet even more preferably greater than 600 kg/mol.

In connection with this invention the term "gel" is understood to denote a fraction of the polymer insoluble for 60 min in cyclohexane boiling under reflux. The gel content is preferably less than 5 wt.%, more preferably less than 3 wt%, even more preferably less than 1 wt%, yet even more preferably less than 0.5 wt%.

The reaction mixture used to produce the present butyl polymer may comprise a multiolefin cross-linking agent. The term cross-linking agent is known to those skilled in the art and is understood to denote a compound that causes chemical cross-linking between the polymer chains in opposition to a monomer that will add to the chain. Some easy preliminary tests will reveal if a compound will act as a monomer or a cross-linking agent. The choice of the cross-linking agent is not particularly restricted. Preferably, the cross-linking comprises a multiolefinic hydrocarbon compound. Examples of these are norbornadiene, 2-isopropenylnorbornene, 2-vinyl-norbornene, 1,3,5-hexatriene, 2-phenyl-1,3-butadiene, divinylbenzene, diisopropenylbenzene, divinyltoluene, divinylxylene and C₁ to C₂₀ alkyl-substituted derivatives thereof. More preferably, the multiolefin crosslinking agent is divinyl-benzene, diisopropenylbenzene, divinyltoluene, divinyl-xylene and C₁ to C₂₀ alkyl substituted derivatives thereof, and or mixtures of the compounds given. Most preferably the multiolefin crosslinking agent comprises divinylbenzene and diisopropenylbenzene. The multiolefin cross-linking agent or derivatives thereof may be present in the butyl rubber polymer.

As stated hereinabove, the butyl polymer is halogenated. Preferably, the butyl polymer is brominated or chlorinated. Preferably, the amount of halogen is in the range of from about 0.1 to about 8%, more preferably from about 0.5% to about 4%, more preferably from about 0.8% to about 3%, most preferably from about 1.5% to about 2.5%, by weight of the polymer.

The halogenated butyl rubber may be produced either by treating finely divided butyl rubber with a halogenating agent or by solution phase techniques. The halogenating agent may comprise elemental chlorine (Cl₂ or bromine (Br₂) and/or organo-halide precursors thereto, for example dibromo-dimethyl hydantoin, tri-chloro isocyanuric acid (TCIA), n-bromosuccinimide, or the like. Preferably, the halogenating agent comprises bromine. The halogenated butyl rubber may be produced by treating finely divided butyl rubber in a mixing apparatus capable of producing sufficient shear, such as an extruder or milling apparatus, and exposing the butyl rubber therein to the halogenation agent.

Alternatively, the halogenated butyl rubber may be produced by treating a solution (or a dispersion) of the previously described high-multiolefin butyl rubber in a suitable organic solvent to form a single-phase "cement" as is conventionally known and treating the solution thus formed with the halogenation agent. The single-phase "cement" solution may be formed using any solvent suitable for dissolving butyl rubber or dispersing butyl rubber. Inert organic solvents suitable for use in commercial butyl rubber polymerization (for example pentane, hexane, heptane and mixtures thereof with one another or with methyl chloride and/or methylene choride) are suitable solvents. Preferred inert organic solvents include C₁ to C₄ halogenated hydrocarbons and mixtures thereof, C₅ to C₈ aliphatic hydrocarbons, C₅ to C₈ cyclic hydrocarbons, mixtures of one or more of the halogenated hydrocarbons and one or more of the aliphatic hydrocarbons, and mixtures of one or more of the halogenated hydrocarbons and one or more of the cyclic hydrocarbons. Most preferably the inert organic solvent is selected from the group consisting of methyl chloride, methylene chloride, hexane, cyclopentane and mixtures thereof.

Importantly, the single-phase cement solution does not include water in the present invention. The inclusion of water generally forms a bi-phasic emulsion with the cement in order to extract the halogenated acid produced during the process from the reactive sites of the butyl rubber polymer and necessitates separation of the water from the solvent at some later stage in the process. The amount of halogenation during this procedure may be controlled so that the final polymer has the preferred amounts of halogen described hereinabove. The specific mode of attaching the halogen to the polymer is not particularly restricted and those of skill in the art will recognize that modes other than those described above may be used while achieving the benefits of the invention. For additional details and alternative embodiments of solution phase halogenation processes, see, for example, Ullmann's Encyclopedia of Industrial Chemistry (Fifth, Completely Revised Edition, Volume A231 Editors Elvers, et al.) and/or "Rubber Technology" (Third Edition) by Maurice Morton, Chapter 10 (Van Nostrand Reinhold Company © 1987), particularly pp. 297-300, which are incorporated herein by reference.

The non-aqueous solution process described above advantageously does not require the addition of a neutralization agent to prevent acid-catalyzed re-arrangement of the exo-allylic halide to the less desirable endo-allylic form. The halogenated butyl rubber produced according to the process of the present invention advantageously comprises, at least 0.15 mol% of exo-allylic halides, more preferably at least 0.4 mol%, yet more preferably at least 0.8 mol%, still more preferably at least 1.0 mol%, even more preferably at least 1.25 mol%, most preferably from about 1.5 mol% to about 3 mol%. This is in contra-distinction to prior art non-aqueous processes performed with lower multiolefin levels, which typically exhibit no exo-allylic halides. In combination with the exo-allylic halides, limited quantities of endo-allylic halides may be found. The halogenated butyl rubber of the present invention may comprise from about 0.05 mol% to about 1.0 mol% endo-allylic halides, preferably from 0.05 mol% to 0.5 mol%, more preferably from 0.1 mol% to 0.35 mol%, yet more preferably from 0.1 mol% to 0.25 mol%, still more preferably from 0.1 mol% to 0.2 mol%. The ratio of exo-allylic halides to endo-allylic halides may be at least 3, preferably at least 3.5, more preferably at least 4, even more preferably at least 4.5, still more preferably at least 5. The allylic halides are preferably present on the same polymer backbone as the multiolefin and the polymer preferably has a monomodal molecular weight distribution. Furthermore, the halogenated butyl rubber produced according to the present invention has residual unsaturation and comprises at least 1.5 mol% of repeating units derived from the original multiolefin, preferably at least 1.75 mol%, more preferably at least 2.0 mol%, even more preferably at least 2.5 mol %, still more preferably at least 3.0 mol%, yet more preferably at least 3.5 mol%.

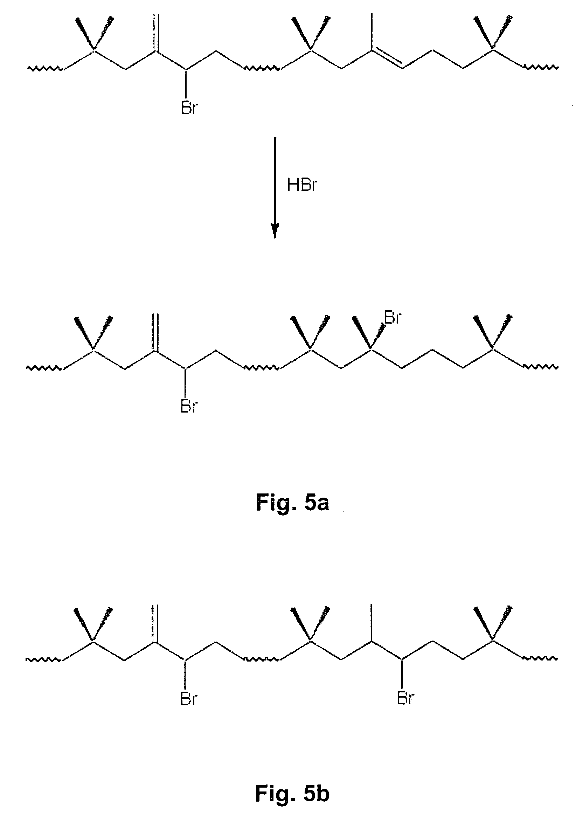

Without desiring to be limited by theory but in an effort to fully explain the invention, based on what is known about the halogenation of alkenes and, in particular, the hydrobromination of alkenes, one would expect that HBr addition to 1,4-IP would proceed in a Markovnikov fashion (Figure 5a). However, as one can see by examining the Markovnikov structure depicted in Figure 5a, this mode of HBr addition results in a species with a great deal of steric crowding. For this reason, it may be possible for HBr addition to proceed via an anti-Markovnikov route to produce the structure shown in Figure 5b. From the foregoing, it seems likely that the HBr produced during the bromination of high-IP butyl rubber is consumed by either Markovnikov or anti-Markovnikov addition, thereby obviating the need for an acid neutralization step. The products of either or both of these addition mechanisms may therefore be found in halogenated butyl rubber produced according to the present invention.

The halogenated rubber produced according to the process of the present invention exhibits improved physical properties and comparable cure reactivity to conventionally produced halogenated rubbers. In particular, the halogenated rubber of the present invention advantageously exhibits superior elongation as compared with the prior art halogenated rubbers, due likely at least in part to the relatively high levels of residual multiolefin monomer. The halogenated butyl rubber polymer according to the present invention may comprise an ultimate elongation of at least 400%, preferably at least 500%, more preferably at least 600%, yet more preferably at least 700%, even more preferably at least 800%, still more preferably at least 900%.

Although neutralization of acidic halides is not required in producing the halogenated butyl rubber, anti-oxidants and/or neutral acid scavengers may be added post-production to stabilize the polymer and improve its shelf life. Conventional finishing processes may be used to separate the halogenated butyl rubber from the single-phase solution. These techniques may include the addition of water; however, the use of aqueous recovery techniques is not to be confused with the non-aqueous method used to produce the halogenated polymer. For example, such techniques may include, for the higher molecular weight polymers, contacting the polymer solution or slurry with copious amounts of hot water thereby flashing the inert organic solvent and any unreacted monomer. The polymer-hot water slurry may then be passed through a tunnel dryer or drying extruder. In another such technique, especially for polymers produced in the presence of an inert organic solvent and having a number average molecular weight of less than about 30,000, the polymer is recovered by (i) contacting the polymer solution or slurry with steam or by applying a vacuum to the polymer solution or slurry to flash off the solvent and any unreacted monomer; (ii) extracting acidic impurities and/or any remaining high boiling diluents with methanol; and (iii) drying the purified polymer to remove traces of methanol. In yet another technique, especially for low molecular weight polymers, the polymer solution is contacted with excess water to remove inorganic residues, the solution is dried and the inert organic solvent is then removed, as by evaporation.

The present halogenated butyl rubber may be used for the production of vulcanized rubber products and/or cured articles. For example, useful vulcanizates may be produced by mixing the halogenated butyl rubber with carbon black and/or other known ingredients (additives) and crosslinking the mixture with a conventional curing agent in a conventional manner. Useful cured articles may comprise tires, specifically tire inner liners, seals and gaskets.

In light of what has been disclosed thus far, in the present invention HBr is consumed by elevated levels of 1,4-IP. In other words, by brominating a high IP IIR substrate, one should be able to rely on the excess 1,4-IP to act as a neutral Brönsted acid scavenger. With the recently successful preparation of IIR with elevated levels of IP, the exact effect of IP content (and resulting IP residuals) on the degree of rearrangement observed for samples of BIIR prepared in the absence of caustic or water can now be experimentally determined and will be further discussed with reference to the following examples.

### Examples

**Materials.** Butyl 301, Bromobutyl 2030 are products of LANXESS Inc. Butyl 402 is a product of LANXESS Rubber N.V. and Vulkacit DM/C (MBTS) is a product of LANXESS Corp. The remaining materials were used as received; Carbon Black N660 (Cabot Canada), Sunpar 2280 (Noco Lubricants), Pentalyn A (Hercules Inc.), Stearic Acid Emersol 132 NF (Acme Hardesty Co.), Sulfur NBS (NIST) and Zinc Oxide (St. Lawrence Chemical Co.).

**Testing.** Hardness and Stress Strain Properties were determined with the use of an A-2 type durometer following ASTM D-2240 requirements. The stress strain data was generated at 23°C according to the requirements of ASTM D-412 Method A. Die C dumbbells cut from 2mm thick tensile sheets (cured for 30 minutes at 166 °C) were used. Permeabilities were determined according to ASTM D-1434. Mooney scorch was measured at 138 °C with the use of an Alpha Technologies MV 2000 according to ASTM 1646. The tc90 times were determined according to ASTM D-5289 with the use of a Moving Die Rheometer (MDR 2000E) using a frequency of oscillation of 1.7 Hz and a 1° arc at 170°C for 30 minutes total run time. Curing was achieved with the use of an Electric Press equipped with an Allan-Bradley Programmable Controller. ¹H NMR spectra were recorded with a Bruker DRX500 spectrometer (500.13 MHz ¹H) in CDCl₃ with chemical shifts referenced to tetramethylsilane.

**Example 1: Bromination of RB301 (with H₂O and Caustic).** To a solution of RB301 (50 g, 1.6 mol % of 1,4-isoprene) in 600 mL of hexanes was added 45 mL of water. To this mixture was added 0.63 mL of elemental bromine with rapid agitation. After 5 minutes, the reaction mixture was neutralized via the introduction of a caustic solution made by admixing 6.5 mL of aqueous 1.0 M NaOH in 500 mL of water. Immediately following neutralization, 4 mL of stabilizer solution (3.75 g of epoxidized soya-bean oil and 0.045 g of Irganox 1076 in 100 mL of hexanes) was charged to the reaction mixture. The rubber was isolated by steam coagulation and dried to constant weight with the use of a 6" x 12" two-roll mill operating at 100 °C. The microstructure of the resulting materials was determined with ¹H NMR spectroscopy (CDCl₃), the results of which are tabulated in Table 1.

**Example 2: Bromination of RB301 (without H₂O and Caustic).** To a solution of RB301 (50 g, 1.6 mol % of 1,4-isoprene) in 600 mL of hexanes was added, with rapid agitation, 0.63 mL of elemental bromine. After 5 minutes, 4 mL of stabilizer solution (3.75 g of epoxidized soya-bean oil and 0.045 g of Irganox 1076 in 100 mL of hexanes) was charged to the reaction mixture. The rubber was isolated by steam coagulation and dried to constant weight with the use of a 6" x 12" two-roll mill operating at 100 °C. The microstructure of the resulting material was determined with ¹H NMR spectroscopy (CDCl₃), the results of which are tabulated in Table 1.

**Example 3: Bromination of RB402 (without H₂O and Caustic).** To a solution of RB402 (50 g, 2.0 mol % of 1,4-isoprene) in 600 mL of hexanes was added, with rapid agitation, 0.63 mL of elemental bromine. After 5 minutes, 4 mL of stabilizer solution (3.75 g of epoxidized soya-bean oil and 0.045 g of Irganox 1076 in 100 mL of hexanes) was charged to the reaction mixture. The rubber was isolated by steam coagulation and dried to constant weight with the use of a 6" x 12" two-roll mill operating at 100 °C. The microstructure of the resulting material was determined with ¹H NMR spectroscopy (CDCl₃), the results of which are tabulated in Table 1.

**Example 4: Bromination of Butyl Rubber Having 3.0 mol % Isoprene (without H₂O and Caustic).** A butyl rubber having elevated levels of isoprene (3.0 mol % of 1,4-isoprene) was prepared according to the teachings of CA 2,418,884. To a solution of 50 g of this high IP rubber in 600 mL of hexane was added, with rapid agitation, 0.63 mL of elemental bromine. After 5 minutes, 4 mL of stabilizer solution (3.75 g of epoxidized soya-bean oil and 0.045 g of Irganox 1076 in 100 mL of hexanes) was charged to the reaction mixture. The rubber was isolated by steam coagulation and dried to constant weight with the use of a 6" x 12" two-roll mill operating at 100 °C. The microstructure of the resulting material was determined with ¹H NMR spectroscopy (CDCl₃), the results of which are tabulated in Table 1.

**Example 5: Bromination of Butyl Rubber Having 5.0 mol % Isoprene (without H₂O and Caustic).** A butyl rubber having elevated levels of isoprene (5.0 mol % of 1,4-isoprene) was prepared according to the teachings of CA 2,418,884. To a solution of 50 g of this high IP rubber in 600 mL of hexane was added, with rapid agitation, 0.63 mL of elemental bromine. After 5 minutes, 4 mL of stabilizer solution (3.75 g of epoxidized soya-bean oil and 0.045 g of Irganox 1076 in 100 mL of hexanes) was charged to the reaction mixture. The rubber was isolated by steam coagulation and dried to constant weight with the use of a 6" x 12" two-roll mill operating at 100 °C. The microstructure of the resulting material was determined with ¹H NMR spectroscopy (CDCl₃), the results of which are tabulated in Table 1.

**Example 6: Bromination of Butyl Rubber Having 6.0 mol % Isoprene (without H₂O and Caustic).** A butyl rubber having elevated levels of isoprene (6.0 mol % of 1,4-isoprene) was prepared according to the teachings of CA 2,418,884. To a solution of 50 g of this high IP rubber in 600 mL of hexane was added, with rapid agitation, 0.63 mL of elemental bromine. After 5 minutes, 4 mL of stabilizer solution (3.75 g of epoxidized soya-bean oil and 0.045 g of Irganox 1076 in 100 mL of hexanes) was charged to the reaction mixture. The rubber was isolated by steam coagulation and dried to constant weight with the use of a 6" x 12" two-roll mill operating at 100 °C. The microstructure of the resulting material was determined with ¹H NMR spectroscopy (CDCl₃), the results of which are tabulated in Table 1.

**Example 7: Bromination of Butyl Rubber Having 6.5 mol % Isoprene (without H₂O and Caustic).** A butyl rubber having elevated levels of isoprene (6.5 mol % of 1,4-isoprene) was prepared according to the teachings of CA 2,418,884. To a solution of 50 g of this high IP rubber in 600 mL of hexane was added, with rapid agitation, 0.63 mL of elemental bromine. After 5 minutes, 4 mL of stabilizer solution (3.75 g of epoxidized soya-bean oil and 0.045 g of Irganox 1076 in 100 mL of hexanes) was charged to the reaction mixture. The rubber was isolated by steam coagulation and dried to constant weight with the use of a 6" x 12" two-roll mill operating at 100 °C. The microstructure of the resulting material was determined with ¹H NMR spectroscopy (CDCl₃), the results of which are tabulated in Table 1.

**Example 8: Standard Inner Liner Formulation Based on BB2030.** The following example describes the preparation of a standard inner liner formulation based on commercially available BB2030 (0.74 mol % of *exo*-allylic bromide, 0.08 mol % of *endo*-allylic bromide and 0.55 mol % of residual 1,4-isoprene as determined by ¹H NMR). 100 phr of BB2030, 7 phr of Sunpar 2280, 60 phr of Carbon Black N660, 4 phr of Pentalyn, 1 phr of Stearic Acid, 1.3 phr of Vulkacit DM/C (MBTS), 0.5 phr of Sulfur and 3 phr of Zinc Oxide was added onto a 6" x 12" two-roll mill operating at 30 °C. The rubber mixture was allowed to band on the mill for a total of 4 minutes after complete incorporation of all the ingredients. The physical properties of cured articles derived from this formulation are presented in Table 3.

**Example 9: Standard Inner Liner Formulation Based on Example 6.** The following example describes the preparation of a standard inner liner formulation based on Example 6 (0.89 mol % of *exo*-allylic bromide, 0.21 mol % of *endo*-allylic bromide and 3.2 mol % of residual 1,4-isoprene as determined by ¹H NMR). 100 phr of BB2030, 7 phr of Sunpar 2280, 60 phr of Carbon Black N660, 4 phr of Pentalyn, 1 phr of Stearic Acid, 1.3 phr of Vulkacit DM/C (MBTS), 0.5 phr of Sulfur and 3 phr of Zinc Oxide was added onto a 6" x 12" two-roll mill operating at 30 °C. The rubber mixture was allowed to band on the mill for a total of 4 minutes after complete incorporation of all the ingredients. The physical properties of cured articles derived from this formulation are presented in Table 3.

### Results and Discussion

**1. Bromination of Commercial Grades of IIR in the Absence of Water and Caustic.** The bromination of RB301 in the presence of both water and caustic (Example 1) resulted in the isolation of BIIR with the majority of allylic halide being present as the kinetically favored exo product (see Table 1). Specifically, ¹H NMR analysis revealed this material to possess ca. 0.81 mol % of *exo*-allylic bromide and ca. 0.03 mol % of the endo isomer. As expected, the residual 1,4-IP level was determined to be 0.40 mol %. When the same bromination reaction was carried out in the absence of water and caustic (Example 2), a very different BIIR was isolated showing no exo-allylic bromide structures. In fact, all of the allylic bromide is in the thermodynamically favored endo form. Furthermore, unlike Example 1, Example 2 possessed a significantly reduced level of residual 1,4-IP (see Table 1). This observation would suggest that the HBr which is liberated during the bromination process is reacting with the residual 1,4-IP which remains after the bromination reaction.

**Table 1. Selected Microstructure Contents for Examples 1 - 3.**

| | Example 1 | Example 2 | Example 3 |
|---|---|---|---|
| Exo-Allylic Br (mol %) | 0.81 | 0.00 | 0.00 |
| Endo-Allylic Br (mol %) | 0.03 | 0.90 | 0.94 |
| Residual 1,4-IP (mol %) | 0.40 | 0.05 | 0.06 |

The highest level of 1,4-IP for commercially prepared butyl rubber is found in RB402. This material is marked by the presence of ca. 2.0 mol % of 1,4-IP. However, when this material was subjected to a bromination procedure in the absence of both water and caustic (Example 3), similar results to those obtained for Example 2 (RB301) were observed. Specifically, ¹H NMR analysis revealed the absence of any *exo*-allylic bromide (see Table 1). In addition, very little 1,4-IP remained in the polymer.

**2. Bromination of High IP Grades of IIR in the Absence of Water and Caustic.** The first series of bromination reactions utilized a butyl rubber having 3.0 mol % of 1,4-IP as the bromination substrate. With this level of IP, the water and caustic free bromination procedure yielded BIIR which possessed a microstructure which was quite different than that observed for either Example 1 or 2 (Example 4, see Table 2). In this case, only a minor component of the allylic bromide was present in the endo form. When the level of isoprene was raised to 5.0 mol % (Example 5), all of the allylic bromide structure was in the exo form. This condition remained on elevation of the 1,4-IP content to 6.0 mol % (Example 6) and 6.5 mol % (Example 7). As expected, the amount of residual IP remaining after the bromination process increased with increasing 1,4-IP in the base material. It therefore appears that the "extra" 1,4-IP present in the base materials belonging to Examples 4 - 7 effectively neutralizes the HBr which is produced during bromination.

**Table 2. Selected Microstructure Contents for Examples 4-7.**

| | Example 4 | Example 5 | Example 6 | Example 7 |
|---|---|---|---|---|
| Exo-Allylic Br (mol %) | 0.86 | 0.97 | 0.89 | 0.95 |
| Endo-Allylic Br (mol %) | 0.35 | 0.18 | 0.21 | 0.14 |
| Residual 1,4-IP (mol %) | 0.61 | 2.50 | 3.20 | 3.78 |

**3. Inner liner Formulations Based on a High IP Analogue of BB2030.** To comparatively assess the performance of the novel halogenated materials in a standard inner liner formulation, two standard inner liner formulations were prepared. The first was based on commercially prepared BB2030 (*exo*-allylic bromide = 0.75 mol %, *endo-*allylic bromide, 0.05 mol %, residual 1,4-IP = 0.55 mol %, Example 8) while the second was based on the High IP BIIR prepared in Example 6 (*exo*-allylic bromide = 0.89 mol %, *endo*-allylic bromide = 0.21, residual 1,4-IP = 3.2 mol %, Example 9). The recipes and mixing conditions employed are described above.

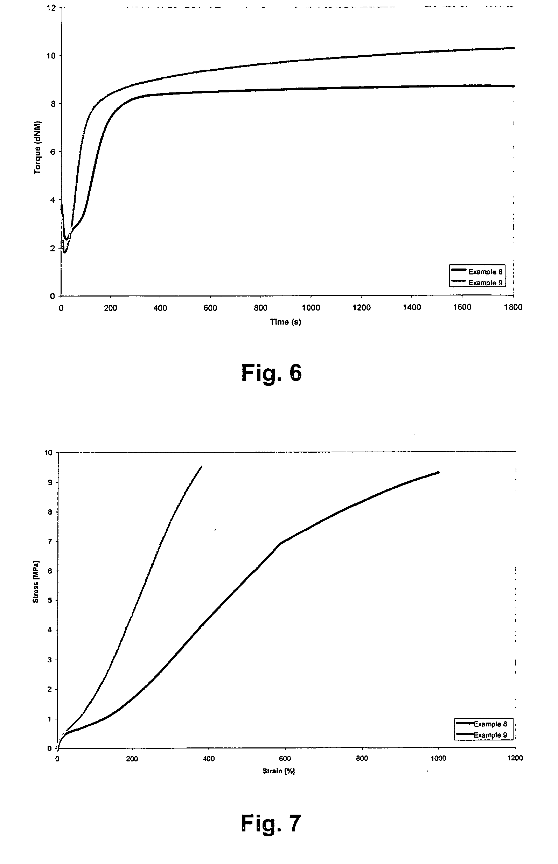

MDR Analysis of the resulting formulations revealed an enhance cure rate and increased final cure state for the compound based on Example 6 (Figure 6). This would suggest that the elevated level of 1,4-IP found in Example 6 (as well as the slight increase in allylic bromide content) is participating in the cure chemistry. Evidence of the higher cure state is also seen in the tensile properties of these formulations. Indeed, the compound based on Example 6 was found to possess a higher degree of reinforcement than its BB2030 analogue (Figure 7). In fact, when one considers the remaining physical properties, many of the differences which were observed could be attributed to an enhanced cure rate and/or elevated cure state (Table 3). Importantly, the permeability of the formulation based on Example 6 was only slightly higher than that seen for the BB2030 control compound. This increase in permeability is consistent with the reduction of isobutylene content which accompanies the elevated levels of 1,4-IP found for Example 6.

**Table 3. Physical Properties for Examples 8 and 9.**

| **Green Strength** | | | **Permeability to Gases** | | |
|---|---|---|---|---|---|
| | **Example 8** | **Example 9** | | **Example 8** | **Example 9** |
| Test Temperature (°C) | 23 | 23 | Cure Time (min) | 30 | 30 |
| Stress @ 100 (MPa) | 0.245 | 0.329 | Cure Temperature (°C) | 166 | 166 |
| Stress @ 200 (MPa) | 0.227 | 0.304 | Conditioning Time (hrs) | 16 | l6 |
| Stress @ 300 (MPa) | 0.201 | 0.271 | Conditioning Temperature (°C) | 23 | 23 |
| Peak Stress (MPa) | 0.247 | 0.332 | Test Gas | air | air |
| Ultimate Tensile (MPa) | >0.064 | 0.062 | Test Temperature (°C) | 65.5 | 65.5 |
| Ultimate Elongation (%) | >908 | 688 | Test Pressure (psig) | 50 | 50 |
| **Stress Strain (Dumbells)** | | | Permeability (cm²/(atm sec)) | 2.60E-08 | 3.00E-08 |
| Cure Time (min) | 30 | 30 | **Compound Mooney Scorch** | | |
| Cure Temperature (°C) | 166 | 166 | Rotor Size | Large | Large |
| Dumbell | Die C | Die C | Test Temperature (°C) | 138 | 138 |
| Test Temperature (°C) | 23 | 23 | t Value t05 (min) | 10.09 | 3.18 |
| Hardness Shore A2 (pts.) | 45 | 48 | t Value t35 (min) | 13.4 | 5.13 |
| Ultimate Tensile (MPa) | 9.3 | 9.05 | t Value t35-t05 (min) | 3.31 | 1.95 |
| Ultimate Elongation (%) | 949 | 369 | **Compound Mooney Viscosity** | | |
| Stress @ 25 (MPa) | 0.509 | 0.602 | Rotor Size | large | large |
| Stress @ 50 (MPa) | 0.634 | 0.927 | Test Temperature (°C) | 100 | 100 |
| Stress @ 100 (MPa) | 0.869 | 1.81 | Preheat Time (min) | 1 | 1 |
| Stress @ 200 (MPa) | 1.67 | 4.55 | Run Time (min) | 4 | 4 |
| Stress @ 300 (MPa) | 2.98 | 7.66 | Mooney Viscosity (MU) | 52.97 | 48.6 |
| **Stress Strain (Hot Air Oven)** | | | Mooney Relaxation (m.m) | 80% decay | 80% decay |
| Cure Time (min) | 30 | 30 | Relaxation Time (min) | 4 | 4 |
| Cure Temperature (°C) | 166 | 166 | Time to Decay (min) | 0.08 | 0.08 |
| Test Temperature (°C) | 23 | 23 | Slope (IgM/Igs) | -0.6163 | -0.4787 |
| Ageing Time (hrs) | 72 | 72 | Intercept (MU) | 26.3 | 19.7 |
| Ageing Temperature (°C) | 125 | 125 | Area Under Curve | 492.8 | 620.1 |
| Ageing Type | air oven | air oven | **MDR Cure Characteristics** | | |
| Hardness Shore A2 (pts.) | 54 | 66 | Frequency (Hz) | 1.7 | 1.7 |
| Ultimate Tensile (MPa) | 9.87 | 8.92 | Test Temperature (°C) | 166 | 166 |
| Ultimate Elongation (%) | 643 | 167 | Degree Arc (°) | 1 | 1 |
| Stress @ 25 (MPa) | 0.726 | 1.36 | Test Duration (min) | 30 | 30 |
| Stress @ 50 (MPa) | 0.952 | 2.36 | Torque Range (dN.m) | 50 | 50 |
| Stress @ 100 (MPa) | 1.5 | 4.93 | Chart No. | 1488 | 1489 |
| Stress @ 200 (MPa) | 3.43 | | MH (dN.m) | 8.71 | 10.27 |
| Stress @ 300 (MPa) | 5.64 | | ML (dN.m) | 2.36 | 1.81 |
| Chg. Hard. Shore A2 (pts.) | 9 | 18 | Delta MH-ML (dN.m) | 6.35 | 8.46 |
| Chg. Ulti. Tens. (%) | 6 | -1 | ts I (min) | 1.5 | 0.69 |
| Chg. Ulti. Elong. (%) | -32 | -55 | ts 2 (min) | 1.92 | 0.9 |
| Change Stress @ 25 (%) | 43 | 126 | t' 10 (min) | 1.13 | 0.64 |
| Change Stress @ 50 (%) | 50 | 155 | t' 25 (min) | 1.77 | 0.89 |
| Change Stress @ 100 (%) | 73 | 172 | t' 50 (min) | 2.3 | 1.29 |
| Change Stress @ 200 (%) | 105 | | t' 90 (min) | 4.49 | 10.57 |
| Change Stress @ 300 (%) | 89 | | t' 95 (min) | 6.85 | 17.3 |

The bromination of RB301 (ca. 1.6 mol % of 1,4-IP) in the presence of water and with neutralization resulted in the formation of the *exo*-allylic bromide almost exclusively. In the absence of water and without neutralization, the bromination of RB301 resulted in a material with no *exo*-allylic bromide structures. In fact, all of the allylic bromide functionality was found as the *endo*-allylic form. This observation is consistent with what is know about the acid catalyzed rearrangement of *exo*-allylic bromides to the corresponding endo-isomer (see Parent, J. S., Thom, D. J., White, G., Whitney, R. A., and Hopkins, W., J. Polym. Sci. Part A: Polym.Chem., 29, 2019-2026, 2001). The bromination of RB402 (2.0 mol % 1,4-IP) under identical conditions also gave rise to a material possessing the *endo*-allylic product exclusively. However, the bromination of IIR with elevated levels of isoprene in the absence of water and without neutralization resulted in the isolation of materials in which the majority of the allylic bromide structures are present in the exo form. Calculations based on ¹H NMR analysis suggest that, at these increased levels, 1,4-IP act as an *in-situ* neutral acid scavenger for the hydrohalic acid (HBr) that is produced during the bromination process. The suitability of this material in compounding applications was assessed through the preparation and evaluation of standard inner liner formulations. Inner liner compounds prepared with commercial BB2030 and with a High IP analogue of BB2030 were compared. The physical data determined for compounds based on High IP BIIR suggest that this elevated level of isoprene contributes to a higher state of cure, and consequently, improved tensile properties. Importantly, the permeability data obtained for both compounds was found to be quite similar.

Presented here is method by which brominated butyl rubber can be prepared without the use of water and, more importantly, without the use of a neutralization agent. This novel methodology represents a significant advancement in halogenation technology with benefits from both an industrial and environmental perspective. Furthermore, this technology could, in principle, be applied to a novel solid-phase halogenation methodology.

The foregoing describes preferred embodiments of the invention and other features and embodiments of the invention will be evident to persons skilled in the art. The following claims are to be construed broadly with reference to the foregoing and are intended by the inventor to include other variations and sub-combinations that are not explicitly claimed.

## Claims

1. A non-aqueous process for preparing a halogenated butyl rubber comprising:
a) providing a butyl rubber polymer comprising repeating units derived from at least one isoolefin monomer and at least 4.1 mol % of repeating units derived from at least one multiolefin monomer;
b) adding a halogenation agent to the butyl rubber polymer; and,
c) reacting the halogenation agent with the multiolefin monomer to create a halogenated butyl rubber containing an allylic halide and at least 1.5 mol% of the original multiolefin monomer.

2. The process according to claim 1, wherein the butyl rubber is provided in a single-phase liquid solution.

3. The process according to claim 2, wherein the halogenation agent is added to the butyl rubber in the single-phase liquid solution.

4. The process according to claim 3, wherein the reaction takes place in the absence of water.

5. The process according to claim 1, wherein the process further comprises forming a hydrohalic Brönsted acid while reacting the halogenation agent with the butyl rubber polymer and scavenging the acid *in-situ* using the multiolefin.

6. The process according to claim 5, wherein the reaction takes place without addition of an acid scavenger.

7. The process according to claim 1, wherein the allylic halide comprises an exo-allylic halide present in an amount of at least 0.4 mol%.

8. A process according to claim 1, wherein the multiolefin monomer is present in an amount of at least 5.0 mol %.

9. A process according to claim 1, wherein the halogenation agent comprises an elemental halide or an organo-halide precursor thereto.

10. A process according to claim 9, wherein the elemental halide comprises a bromide.

11. A halogenated butyl rubber polymer comprising:
a) repeating units derived from at least one isoolefin monomer;
b) at least 4.1 mol % of repeating units derived from at least one multiolefin monomer, the repeating units comprising an allylic halide; and,
c) the allylic halide comprising an exo-allylic halide of the multiolefin monomer present in an amount of at least 0.4 mol% of the halogenated butyl rubber polymer.

12. The rubber according to claim 11, wherein the allylic halide further comprises an endo-allylic halide present in an amount of from 0.1 mol % to 0.5 mol %.

13. The rubber according to claim 12, wherein the ratio of the exo-allylic halide to the endo-allylic halide is at least 4.

14. The rubber according to claim 11, wherein the exo-allylic halide is a bromide.

15. The rubber according to claim 11, wherein the multiolefin is present in an amount of at least 5.0 mol %.

16. The rubber according to claim 11, wherein the exo-allylic halide is present on the same polymer backbone as the multiolefin.

17. The rubber according to claim 11, wherein the halogenated butyl rubber polymer has a mono-modal molecular weight distribution.

18. A peroxide cured article comprising the peroxide curable halogenated butyl rubber polymer according to claim 11.

19. A halogenated butyl rubber polymer comprising:
a) repeating units derived from at least one isoolefin monomer;
b) at least 4.1 mol % of repeating units derived from at least one multiolefin monomer, the repeating units comprising an allylic halide;
c) the allylic halide comprising an exo-allylic halide of the multiolefin monomer present in a first molar quantity;
d) the allylic halide further comprising an endo-allylic halide of the multiolefin monomer present in a second molar quantity; and,
e) wherein the ratio of the first molar quantity to the second molar quantity is at least 4.

20. The rubber according to claim 19, wherein the exo-allylic halide and the endo-allylic halides are bromides.
